# EUROPEAN PATENT APPLICATION

(11) **EP 3 876 607 A1**
(43) Date of publication of application: **08.09.2021**
(21) Application number: 18939316.8
(22) Date of filing: 06.12.2018
(51) Int. Cl.: H04W 48/20, H04W 48/04

(54) **INTELLIGENT SCHEDULING METHOD, TERMINAL DEVICE, EDGE NODE CLUSTER AND INTELLIGENT SCHEDULING SYSTEM**

(30) Priority: 08.11.2018 CN 201811326901
(71) Applicant: Wangsu Science & Technology Co., Ltd., Shanghai 201800 (CN)
(72) Inventor: ZHOU, Xiangmei, Shanghai 201800 (CN); ZHANG, Qingrong, Shanghai 201800 (CN); HUANG, Yuxian, Shanghai 201800 (CN); CHEN, Xuming, Shanghai 201800 (CN)
(74) Representative: De Arpe Tejero, Manuel
(86) International application number: PCT/CN2018/119592
(87) International publication number: WO 2020/093500

(57) **Abstract**

Embodiments of the present disclosure relate to the field of network technologies, and provide an intelligent scheduling method, a terminal device, an edge node cluster, and an intelligent scheduling system. The intelligent scheduling method may be applied to a terminal device. The method includes acquiring addresses of a plurality of edge node clusters corresponding to the terminal device, sending probe packets to each edge node cluster and receiving detection results of responses by each edge node cluster, calculating network connection quality parameters of each edge node cluster according to the detection results of the responses by each edge node cluster, and according to the network connection quality parameters of each edge node cluster, initiating an access request to an edge node cluster that meets a first preset condition for the edge node cluster that meets the first preset condition to respond to the access request. In the present disclosure, the terminal device may be connected to an edge node cluster whose network connection quality parameters meet the first preset condition. That is, the terminal device may be connected to an edge node cluster with a better network connection quality, such that the terminal device may obtain a better service.

## Description

### FIELD

The present disclosure generally relates to the field of network technologies and, more particularly, relates to an intelligent scheduling method, a terminal device, an edge node cluster, and an intelligent scheduling system.

### BACKGROUND

With development of network technologies and advent of an era of the Internet of Everything (IoE), any object may become a data processing center. Various types of Internet-connected devices, such as mobile phones, tablet computers, transmitters, intelligent scheduling gateways, security cameras, vehicles, and the like, may generate a large amount of data for mining and analysis. At present, a content delivery network (CDN) may have a huge reserve of edge node resources. A terminal device may select an edge node in a CDN to access the CDN for obtaining a corresponding edge computing service.

The inventor of the present disclosure finds that at least following problems may exist in existing technologies. A terminal device usually selects a fixed local edge node or an edge node in a same large area to access a CDN. However, the edge node accessed by the terminal device may not necessarily be an edge node closest to the terminal device. Accordingly, an edge computing service in vicinity may not be truly achieved, and a quality of an edge computing service acquired by the terminal device may be affected.

### BRIEF SUMMARY OF THE DISCLOSURE

An objective of the present disclosure is to provide an intelligent scheduling method, a terminal device, an edge node cluster, and an intelligent scheduling system, so that the terminal device may be connected to an edge node cluster whose network connection quality parameter meets a first preset condition. That is, the terminal device may connect to an edge node cluster with a good network connection quality, and the terminal device may thus obtain a good service.

To address the above technical issues, the present disclosure provides an intelligent scheduling method, and the method may be applied to a terminal device. The method includes acquiring addresses of a plurality of edge node clusters corresponding to the terminal device, sending probe packets to each edge node cluster, and receiving detection results of responses by each edge node cluster, calculating network connection quality parameters of each edge node cluster according to the detection results of the responses by each edge node cluster, and according to the network connection quality parameters of each edge node cluster, initiating an access request to an edge node cluster that meets the first preset condition, such that the edge node cluster that meets the first preset condition may respond to the access request.

The present disclosure also provides a terminal device. The terminal device includes at least one processor and a memory communicatively connected to the at least one processor. The memory stores instructions executable by at least one processor, and the at least one processor may execute the instructions and thus perform the above intelligent scheduling method.

The present disclosure also provides an intelligent scheduling method. The method may be applied to an intelligent scheduling gateway of an edge node cluster, and the edge node cluster also includes a plurality of edge nodes connected to the intelligent scheduling gateway. The method includes, when receiving probe packets sent by a terminal device, feeding back detection results to the terminal device. The terminal device calculates network connection quality parameters of each edge node cluster according to the detection results fed back by each edge node cluster, and then according to the network connection quality parameters of each edge node cluster, initiate an access request to the edge node cluster that meets the first preset condition. The method also includes responding to the access request through the plurality of edge nodes when receiving an access request of the terminal device.

The present disclosure also provides an edge node cluster. The edge node cluster includes an intelligent scheduling gateway and a plurality of edge nodes connected to the intelligent scheduling gateway. The intelligent scheduling gateway is configured to feed back detection results to a terminal device when the scheduling gateway receives detection packets sent by the terminal device. The terminal device may thus calculate network connection quality parameters of each edge node cluster according to the detection results fed back by each edge node cluster, and initiate an access request to an edge node cluster according to the network connection quality parameters of each edge node cluster. The intelligent scheduling gateway is also configured to respond to the access request through the edge node when the intelligent scheduling gateway receives the access request initiated by the terminal device.

The present disclosure also provides an intelligent scheduling system. The system includes the above terminal device, and a plurality of the above edge node clusters.

Compared with existing technologies, in the present disclosure, after obtaining the addresses of the plurality of edge node clusters corresponding to the terminal device, the terminal device may send probe packets respectively to each of the edge node clusters, and receive the detection results of the responses by each of the edge node clusters. Accordingly, according to the detection results of the responses by each of the edge node clusters, the terminal device may calculate the network connection quality parameters of each of the edge node clusters. Then, according to the network connection quality parameters of each of the edge node clusters, the terminal device may initiate an access request to the edge node cluster that meets the first preset condition. The edge node cluster that meets the first preset condition may thus respond to the access request. In the present disclosure, the terminal device may be connected to an edge node cluster whose network connection quality parameters meet the first preset condition. That is, the terminal device may be connected to an edge node cluster with a better network connection quality, and thus the terminal device may obtain a better service.

In addition, domain names of the edge nodes are pre-stored in the terminal device. Acquiring addresses of a plurality of edge node clusters corresponding to a terminal device includes accessing the domain names of the edge nodes and thus obtaining the addresses of the plurality of edge node clusters corresponding to the terminal device. The present disclosure provides an implementation method for a terminal device to acquire the addresses of a plurality of edge node clusters.

In addition, initiating an access request to the edge node cluster that meets the first preset condition according to the network connection quality parameters of each edge node cluster includes calculating an evaluation value of an network connection quality of each edge node cluster according to the network connection quality parameters of each edge node cluster, and initiating an access request to an edge node cluster that has a highest evaluation value of the network connection quality. The present disclosure provides an implementation method for initiating an access request to the edge node cluster that meets the first preset condition according to the network connection quality parameters of each edge node cluster.

In addition, the network connection quality parameters may include any one or any combination of following parameters: delay, packet loss rate, and transmission speed. The present disclosure provides specific contents of the network connection quality parameters.

In addition, a loading status information table may be established according to the received loading status parameters of each edge node. Responding to the access request through an edge node includes according to the loading status information table, selecting an edge node that meets a second preset condition to respond to the access request. In the present disclosure, an edge node that meets the second preset condition may be selected to respond to the access request according to the loading status parameters of each edge node. That is, an edge node with a lighter loading may be selected to respond to the access request of the terminal device, such that available and stable services may be provided to the terminal device.

In addition, establishing a loading status information table according to the received loading status parameters of each edge node includes calculating a loading status evaluation value according to the received loading status parameters of each edge node, and establishing a loading status information table including the loading status evaluation value corresponding to each edge node. Selecting the edge node that meets the second preset condition to respond to the access request according to the loading status information table includes selecting an edge node in the loading status information table that has a smallest loading status evaluation value to respond to the access request. The present disclosure provides a specific implementation approach for selecting the edge node that meets the second preset condition to respond to the access request, according to the loading status information table.

In addition, the edge node cluster also includes an intelligent monitoring component. The intelligent monitoring component is configured to determine, according to operation health status information of each edge node, whether each edge node has an abnormality when the intelligent monitoring component receives the operation health status information of each edge node, and when it is determined that at least one edge node has an abnormality, to send alarm information including information of the at least one edge node that has an abnormality to an intelligent monitoring platform. When the intelligent scheduling gateway receives a node scheduling instruction sent by the intelligent monitoring platform, the at least one edge node that has an abnormality may be switched. When the intelligent monitoring platform receives the alarm information, the intelligent monitoring platform sends the node scheduling instruction including information of the at least one edge node that has an abnormality to the intelligent scheduling gateway. In the present disclosure, the edge node that has an abnormality may be automatically switched to ensure stability and reliability of services provided for the terminal device.

In addition, after switching the at least one edge node, an intelligent scheduling method may also include re-receiving the loading status parameters of each edge node, and updating the loading status information table according to the re-received loading status parameters of each edge node. In the present disclosure, after switching the edge node with an abnormality, the loading status parameters of the edge nodes that are available may be re-received, and the loading status information table may be updated.

In addition, the loading status parameters may include any one or any combination of following parameters: number of terminal device connections, bandwidth usage, CPU usage, and memory usage. The president disclosure provides specific contents of the loading status parameters.

### BRIEF DESCRIPTION OF THE DRAWINGS

One or a plurality of embodiments are exemplarily described through one or a combination of accompanying drawings. Exemplary descriptions of these embodiments do not constitute a limitation on embodiments of the present disclosure. Elements in the drawings having a same reference numeral are designated as similar elements. The accompanying drawings do not constitute a scale limitation unless otherwise stated.
Figure 1 illustrates a specific flowchart of an exemplary intelligent scheduling method according to a first embodiment of the present disclosure;
Figure 2 illustrates a specific flowchart of an exemplary intelligent scheduling method according to a second embodiment of the present disclosure;
Figure 3 illustrates a specific flowchart of an exemplary intelligent scheduling method according to a third embodiment of the present disclosure;
Figure 4 illustrates a specific flowchart of an exemplary intelligent scheduling method according to a fourth embodiment of the present disclosure;
Figure 5 illustrates a specific flowchart of an exemplary intelligent scheduling method according to a fifth embodiment of the present disclosure;
Figure 6 illustrates a specific flowchart of an exemplary intelligent scheduling method according to a sixth embodiment of the present disclosure;
Figure 7 illustrates a block diagram of an exemplary edge node cluster according to an eighth embodiment of the present disclosure;
Figure 8 illustrates a block diagram of an exemplary edge node cluster according to a tenth embodiment of the present disclosure;
Figure 9 illustrates a block diagram of an exemplary intelligent scheduling system according to an eleventh embodiment of the present disclosure; and
Figure 10 illustrates a block diagram of an exemplary intelligent scheduling system according to a twelfth embodiment of the present disclosure.

### DETAILED DESCRIPTION

To make objectives, technical solutions and advantages of the present disclosure more explicit, embodiments of the present disclosure are described below in detail with reference to the accompanying drawings. However, it is apparent to those skilled in the art that, in each of the embodiments of the present disclosure, a lot of technical details are provided for readers to better understand the present disclosure. However, the technical solutions claimed in the present disclosure may be implemented without these technical details and various changes and modifications based on the embodiments of the present disclosure.

A first embodiment of the present disclosure relates to an intelligent scheduling method that may be applied to a terminal device. The terminal device may include a mobile phone, a tablet computer, a computer host, a vehicle system, a smart home appliance, or the like.

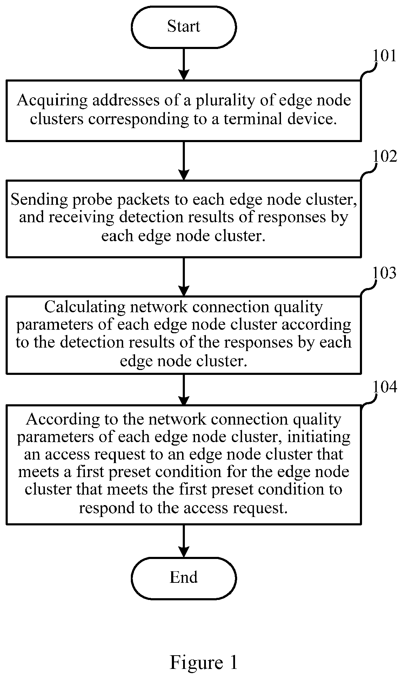

A specific flowchart of the intelligent scheduling method of the first embodiment is shown in Figure 1.

Step 101: acquiring addresses of a plurality of edge node clusters corresponding to a terminal device.

Specifically, domain names of edge nodes are pre-stored in the terminal device. The terminal device may access the domain names of the edge nodes to obtain the addresses of the plurality of edge node clusters corresponding to the terminal device. A software development kit (SDK) module may be deployed in the terminal device in advance. The terminal device may send a request to a server corresponding to the domain names of the edge nodes to obtain the addresses of the plurality of edge node clusters of a large area where the terminal device is located. The terminal device may set a timing task. Each time after the timing task is started, the terminal device may obtain the addresses of the corresponding plurality of edge node clusters. In the first embodiment, when the terminal device acquires the addresses of the plurality of edge node clusters for the first time, the terminal device may establish an address list of the plurality of edge node clusters. Then, each time when the terminal device acquires the addresses of the plurality of edge node clusters, the terminal device may determine whether there is an update for the address of each edge node cluster. When there is an update for the address of one edge node cluster, a corresponding address in the address list may be replaced with an updated address of the edge node cluster.

Step 102: sending probe packets to each edge node cluster, and receiving detection results of responses by each edge node cluster.

Specifically, the terminal device may send probe packets to each edge node cluster according to the address of each edge node cluster, for example, a Transmission Control Protocol (TCP) connection probe packet, a Packet Internet Groper (PING) probe packet, etc. Each edge node cluster may feed back detection results to the terminal device when the edge node cluster receives the probe packets. Accordingly, the terminal device may receive the detection results of the responses by each edge node cluster.

Step 103: calculating network connection quality parameters of each edge node cluster according to the detection result of the response by each edge node cluster.

Specifically, the terminal device may calculate the network connection quality parameters of each edge node cluster according to the detection result of the response by each edge node cluster. The network connection quality parameters may include any one or any combination of following parameters: delay, packet loss rate, and transmission speed. For example, the network connection quality parameters may include the packet loss rate and the transmission speed. A specific calculation method of the packet loss rate may be: packet loss rate = (number of probe packets - number of probe results) / number of probe packets. A specific calculation method of the transmission speed may be: transmission speed = size of the detection result / time taken for the detection.

Step 104: according to the network connection quality parameters of each edge node cluster, initiating an access request to an edge node cluster that meets a first preset condition for the edge node cluster that meets the first preset condition to respond to the access request.

Specifically, according to the network connection quality parameters of each edge node cluster, the terminal device may select the edge node cluster that meets the first preset condition. The terminal device may then initiate an access request to the edge node cluster that meets the first preset condition, and the node cluster that meets the first preset condition may respond to the access request. Accordingly, the terminal device may establish a connection with the edge node cluster that meets the first preset condition, and thus obtain a better edge computing service.

Compared with existing technologies, in the first embodiment, after obtaining the addresses of the plurality of edge node clusters corresponding to the terminal device, the terminal device may send probe packets respectively to each of the edge node clusters, and receive the detection results of the responses by each of the edge node clusters. Accordingly, according to the detection results of the responses by each of the edge node clusters, the terminal device may calculate the network connection quality parameters of each of the edge node clusters. Then, according to the network connection quality parameters of each of the edge node clusters, the terminal device may initiate an access request to the edge node cluster that meets the first preset condition. The edge node cluster that meets the first preset condition may thus respond to the access request. In the first embodiment, the terminal device may be connected to the edge node cluster whose network connection quality parameters meet the first preset condition. That is, the terminal device may be connected to the edge node cluster with a better network connection quality, and thus the terminal device may obtain a better service.

A second embodiment of the present disclosure relates to an intelligent scheduling method. The second embodiment is substantially same as the first embodiment. The main difference is that, in the second embodiment, a specific implementation approach is provided for initiating an access request to an edge node cluster that meets the first preset condition according to the network connection quality parameters of each edge node cluster.

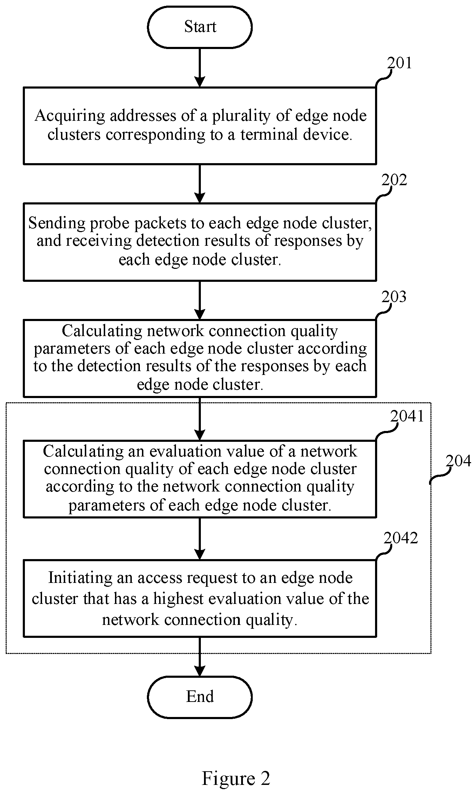

A specific flowchart of the intelligent scheduling method of the second embodiment is shown in Figure 2.

Since steps 201 to 203 in Figure 2 are substantially same as the steps 101 to 103 in Figure 1, details of steps 201 to 203 are not described here. A main difference is that step 204 in Figure 2 includes sub-step 2041 and sub-step 2042.

Sub-step 2041: calculating an evaluation value of a network connection quality of each edge node cluster according to the network connection quality parameters of each edge node cluster.

Specifically, a weight of each network connection quality parameter is pre-set in the terminal device. After the network connection quality parameters of each edge node cluster are received, the evaluation value of the network connection quality of each edge node cluster may be calculated according to the weight of each network connection quality parameter.

Sub-step 2042, initiating an access request to an edge node cluster that has a highest evaluation value of the network connection quality.

Specifically, the terminal device may initiate an access request to the edge node cluster that has the highest evaluation value of the network connection quality. That is, the terminal device may initiate an access request to the edge node cluster that has a highest network connection quality. Accordingly, the terminal device may establish a connection with the edge node cluster that has a highest network connection quality, and obtain an edge computing service from the edge node cluster that has a highest connection quality.

Compared with the first embodiment, the second embodiment provides a specific implementation approach for initiating an access request to the edge node cluster that meets the first preset condition according to the network connection quality parameters of each edge node cluster.

A third embodiment of the present disclosure relates to an intelligent scheduling method. The third embodiment may be applied to an intelligent scheduling gateway of an edge node cluster, and the edge node cluster may further include a plurality of edge nodes connected to the intelligent scheduling gateway.

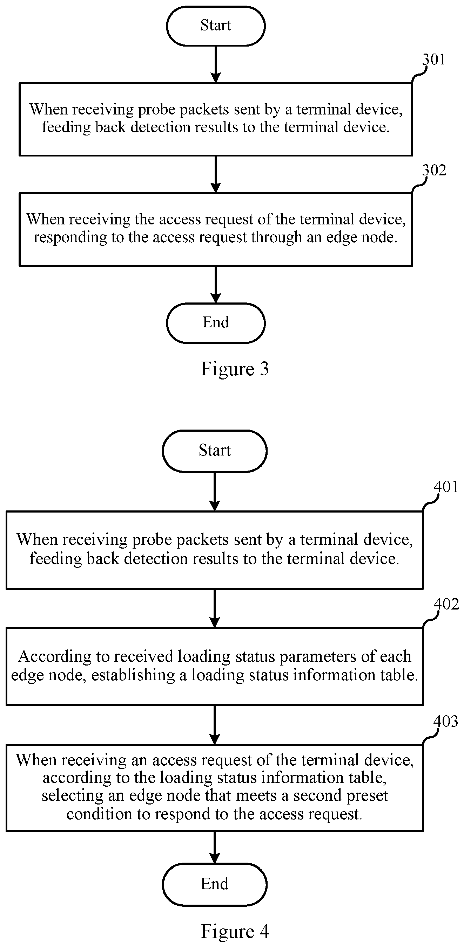

A specific flowchart of the intelligent scheduling method of the third embodiment is shown in Figure 3.

Step 301: when receiving probe packets sent by a terminal device, feeding back detection results to the terminal device.

Specifically, when an intelligent scheduling gateway of an edge node cluster receives the probe packets sent by the terminal device, the intelligent scheduling gateway of the edge node cluster may feed back the detection results to the terminal device. After the terminal device receives the detection results fed back by each edge node cluster, the terminal device may calculate the network connection quality parameters of each edge node cluster according to the detection results fed back by each edge node cluster. According to the network connection quality parameters of each edge node cluster, the terminal device may then initiate an access request to the edge node cluster that meets the first preset condition.

Step 302: when receiving the access request of the terminal device, responding to the access request through an edge node.

Specifically, the address of each edge node is preset in the intelligent scheduling gateway. When the intelligent scheduling gateway receives the access request initiated by the terminal device, the intelligent scheduling gateway may forward the access request to one of the edge nodes according to the address of each edge node, such that the access request initiated by the terminal device may be responded through the edge node.

Compared with existing technologies, in the third embodiment, after obtaining the addresses of the plurality of edge node clusters corresponding to the terminal device, the terminal device may send probe packets respectively to each of the edge node clusters, and receive the detection results of the responses by each of the edge node clusters. Accordingly, according to the detection results of the responses by each of the edge node clusters, the terminal device may calculate the network connection quality parameters of each of the edge node clusters. Then, according to the network connection quality parameters of each of the edge node clusters, the terminal device may initiate an access request to the edge node cluster that meets the first preset condition. The edge node cluster that meets the first preset condition may thus respond to the access request. In the third embodiment, the terminal device may be connected to the edge node cluster whose network connection quality parameters meet the first preset condition. That is, the terminal device may be connected to the edge node cluster with a better network connection quality, and thus the terminal device may obtain a better service.

A fourth embodiment of the present disclosure relates to an intelligent scheduling method. The fourth embodiment is an improvement based on the third embodiment. A main improvement is that, in the fourth embodiment, according to loading status of each edge node, an edge node may be selected to respond to the access request of the terminal device.

A specific flowchart of the intelligent scheduling method of the fourth embodiment is shown in Figure 4.

Step 401 in Figure 4 is substantially same as step 301 in Figure 3, and is not described here again. A main difference is that step 402 is added in Figure 4, as described below.

Step 402: according to received loading status parameters of each edge node, establishing a loading status information table.

Specifically, the intelligent scheduling gateway may communicate with a plurality of edge nodes in a subscription/publishing way. The intelligent scheduling gateway may subscribe to the loading state parameters of the plurality of edge nodes, and each edge node may actively report its own loading status parameters to the intelligent scheduling gateway. According to the received loading status parameters of each edge node, the intelligent scheduling gateway may establish a loading status information table that represents the loading status of the plurality of edge nodes. The loading status parameters may include any one or any combination of the following parameters: number of terminal device connections, bandwidth usage, CPU usage, and memory usage.

In the fourth embodiment, each edge node may report its own loading status parameters to the intelligent scheduling gateway at a certain time interval, and thus the intelligent scheduling gateway may timely update the loading status information table.

Step 403: when receiving an access request of the terminal device, according to the loading status information table, selecting an edge node that meets a second preset condition to respond to the access request.

Specifically, when the intelligent scheduling gateway receives the access request initiated by the terminal device, according to the loading status of each edge node in the load state information table, the intelligent scheduling gateway may forward the access request to the edge node that meets the second preset condition. The intelligent scheduling gateway may then respond to the access request initiated by the terminal device through the edge node that meets the second preset condition.

It should be noted that Figure 4 only illustrates an exemplary execution order of step 401 and step 402. The fourth embodiment does not limit an actual execution order of step 401 and step 402. That is, step 402 may also be performed before step 401.

Compared with the third embodiment, the fourth embodiment may, according to the loading status parameters of each edge node, select an edge node that meets the second preset condition to respond to the access request. That is, an edge node with a lighter loading may be selected to respond to the access request of the terminal device such that available and stable services may be provided to the terminal device.

A fifth embodiment of the present disclosure relates to an intelligent scheduling method. The fifth embodiment is substantially same as the fourth embodiment. A main difference is that the fifth embodiment provides a specific implementation approach for selecting an edge node that meets the second preset condition to respond to the access request according to the loading status information table.

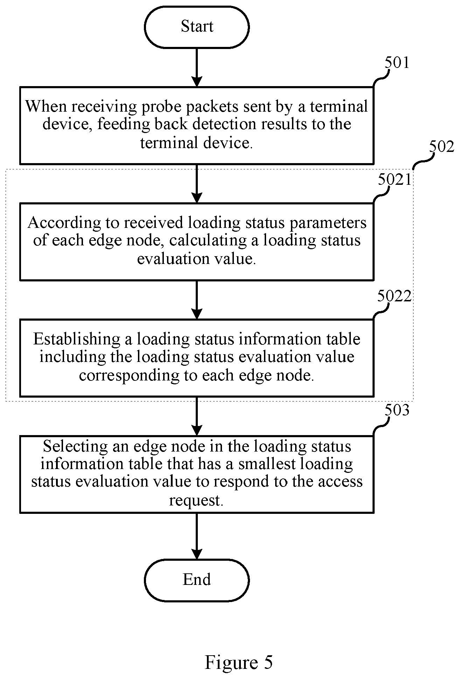

A specific flowchart of the intelligent scheduling method of the fifth embodiment is shown in Figure 5.

Step 501 in Figure 5 is substantially same as step 401 in Figure 4, and is not described here. A main difference is that step 502 includes sub-step 5021 and sub-step 5022.

Sub-step 5021: according to received loading status parameters of each edge node, calculating a loading status evaluation value.

Specifically, the intelligent scheduling gateway may receive loading status parameters of each edge node, set different weights for different loading status parameters, and calculates the loading status evaluation value that represents a loading status of each edge node.

Sub-step 5022: establishing a loading status information table including the loading status evaluation value corresponding to each edge node.

Specifically, an address of each edge node is preset in the intelligent scheduling gateway. Corresponding relationship between the address of each edge node and the loading status evaluation value may be established, and the loading status information table may be established. The loading status information table may include the address of each edge node, and the loading status evaluation value corresponding to the address of each edge node.

Step 503: selecting an edge node in the loading status information table that has a smallest loading status evaluation value to respond to the access request.

Specifically, the edge node with the smallest loading status evaluation value may be selected from the plurality of edge nodes to respond to the access request of the terminal device. That is, an edge node with a lightest loading may be selected to respond to the access request of the terminal device.

Compared with the fourth embodiment, the fifth embodiment provides a specific implementation approach for selecting the edge node that meets the second preset condition to respond to the access request, according to a loading status information table.

A sixth embodiment of the present disclosure relates to an intelligent scheduling method. The sixth embodiment is an improvement based on the third embodiment. A main improvement is that, in the sixth embodiment, an edge node having an abnormality may be automatically switched.

In the sixth embodiment, the edge node cluster further includes an intelligent monitoring component connected to a plurality of edge nodes. The intelligent monitoring component may communicate with the plurality of edge nodes in a subscription/publishing way. The intelligent monitoring component may subscribe to operation health status information of the plurality of edge nodes. The plurality of edge nodes may actively report their own operation health status information to the intelligent monitoring component. The operation health status information of an edge node may include, for example, whether an application is operating normally, whether a service component is operating normally, whether the edge node is operating normally, and so on. According to the operation health state information reported by each edge node, the intelligent monitoring component may determine whether each edge node has an abnormality, that is, whether each edge node is available. When at least one edge node is determined to be abnormal, an alarm information including the information of the at least one edge node having an abnormality may be sent to an intelligent monitoring platform.

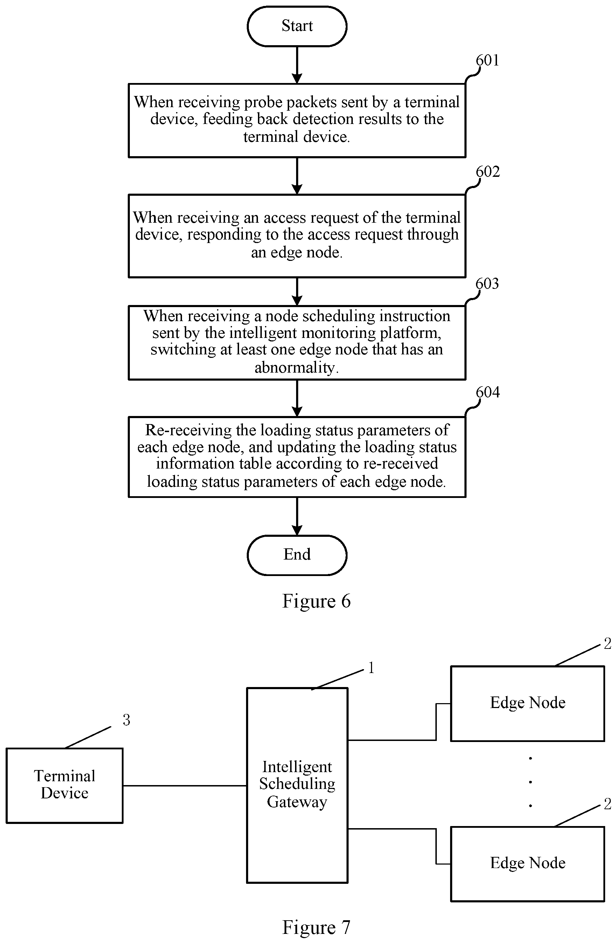

A specific flowchart of the intelligent scheduling method of the sixth embodiment is shown in Figure 6.

Steps 601 and 602 in Figure 6 are substantially same as steps 301 and 302 in Figure 3, and are not described here. A main difference is that, in the sixth embodiment, steps 603 and 604 are added, as described below.

Step 603: when receiving a node scheduling instruction sent by the intelligent monitoring platform, switching at least one edge node with an abnormality.

Specifically, when the intelligent monitoring platform receives an alarm information sent by the intelligent monitoring component, the intelligent monitoring platform may send a node scheduling instruction to the intelligent scheduling gateway. The node scheduling instruction may include address information of the edge node with an abnormality. When the intelligent scheduling gateway receives the scheduling instruction of the node with an abnormality, the intelligent scheduling gateway may automatically switch the edge node with an abnormality. For example, the edge node with an abnormality may be eliminated, and thus data requests of the terminal device may not be sent to the edge node with an abnormality.

In one embodiment, after step 603, the intelligent scheduling method further includes step 604.

Step 604: re-receiving the loading status parameters of each edge node, and updating the loading status information table according to the re-received loading status parameters of each edge node.

Specifically, after switching the edge node with an abnormality, the intelligent scheduling gateway may re-receive the loading status parameters of the edge nodes that are currently operating normally, and update the loading status information table according to the re-received loading status parameters of each edge node.

It should be noted that Figure 6 only illustrates an exemplary execution sequence of each step. The sixth embodiment does not limit execution sequences of steps 603 and 604, and steps 601 and 602.

Compared with the third embodiment, the sixth embodiment may automatically switch an edge node with an abnormality to ensure stability and reliability of services provided to the terminal device. It should be noted that the sixth embodiment may also be taken as an improvement on the fourth or fifth embodiment, and same technical effects may be achieved.

In the embodiments described above, a purpose of dividing an embodiment into steps is to explicitly describe the embodiment. In an implementation of these embodiments, a plurality of steps may be combined into one step, or one step may split and decomposed into a plurality of steps. An implementation is within the protection scope of the present disclosure provided that the implementation includes a same logical relationship with any one or any combination of the embodiments of the present disclosure. Adding insignificant modifications to an algorithm or process of the present disclosure, or introducing an insignificant design, without changing a core design of an algorithm and process of the present disclosure, is within the protection scope of the present disclosure.

A seventh embodiment of the present disclosure relates to a terminal device. The terminal device may be, for example, a mobile phone, a tablet computer, a computer host, a vehicle system, a smart home appliance, or the like. The terminal device includes at least one processor, and a memory communicatively coupled to at least one processor.

The memory may store instructions executable by at least one processor. The instructions may be executed by the at least one processor, such that the at least one processor may perform an intelligent scheduling method of the present disclosure, such as the intelligent scheduling method in the first or second embodiment.

Since the first embodiment and the second embodiment correspond to the seventh embodiment, the seventh embodiment may be implemented in cooperation with the first embodiment and the second embodiment. Related technical details described in the first embodiment and the second embodiment may be still effective in the seventh embodiment. Technical effects that may be achieved in the first embodiment and the second embodiment may also be achieved in the seventh embodiment. To reduce repetition, these technical details and technical effects are not described herein again. Correspondingly, related technical details described in the seventh embodiment may also be applied to the first embodiment and the second embodiment.

Compared with existing technologies, in the seventh embodiment, after obtaining the addresses of the plurality of edge node clusters corresponding to the terminal device, the terminal device may send probe packets respectively to each of the edge node clusters, and receive the detection results of the responses by each of the edge node clusters. Accordingly, according to the detection results of the responses by each of the edge node clusters, the terminal device may calculate the network connection quality parameters of each of the edge node clusters. Then, according to the network connection quality parameters of each of the edge node clusters, the terminal device may initiate an access request to the edge node cluster that meets the first preset condition. The edge node cluster that meets the first preset condition may thus respond to the access request. In the seventh embodiment, the terminal device may be connected to the edge node cluster whose network connection quality parameters meet the first preset condition. That is, the terminal device may be connected to the edge node cluster with a better network connection quality, and thus the terminal device may obtain a better service.

An eighth embodiment of the present disclosure relates to an edge node cluster. Referring to Figure 7, the edge node cluster includes an intelligent scheduling gateway 1, and a plurality of edge nodes 2 connected to the intelligent scheduling gateway 1.

The intelligent scheduling gateway 1 may be configured to feed back detection results to the terminal device 3 when receiving a detection packet sent by the terminal device 3. The terminal device 3 may then calculate network connection quality parameters of each edge node cluster according to the detection results fed back by each edge node cluster. The terminal device 3 may initiate an access request to one edge node cluster according to the network connection quality parameters of each edge node cluster.

The intelligent scheduling gateway 1 may be further configured to respond to the access request through one edge node 2 when the intelligent scheduling gateway 1 receives the access request initiated by the terminal device 3.

Since the third embodiment corresponds to the eighth embodiment, the eighth embodiment may be implemented in cooperation with the third embodiment. Related technical details described in the third embodiment may be still effective in the eighth embodiment. Technical effects that may be achieved in the third embodiment may also be achieved in the eighth embodiment. To reduce repetition, these technical details and technical effects are not described herein again. Correspondingly, related technical details described in the eighth embodiment may also be applied to the third embodiment.

Compared with existing technologies, in the eighth embodiment, after obtaining the addresses of the plurality of edge node clusters corresponding to the terminal device, the terminal device may send probe packets respectively to each of the edge node clusters, and receive the detection results of the responses by each of the edge node clusters. Accordingly, according to the detection results of the responses by each of the edge node clusters, the terminal device may calculate the network connection quality parameters of each of the edge node clusters. Then, according to the network connection quality parameters of each of the edge node clusters, the terminal device may initiate an access request to the edge node cluster that meets the first preset condition. The edge node cluster that meets the first preset condition may thus respond to the access request. In the eighth embodiment, the terminal device may be connected to the edge node cluster whose network connection quality parameters meet the first preset condition. That is, the terminal device may be connected to the edge node cluster with a better network connection quality, and thus the terminal device may obtain a better service.

A ninth embodiment of the present disclosure relates to an edge node cluster. The ninth embodiment is an improvement based on the eighth embodiment. A main improvement is that, referring to Figure 7, the intelligent scheduling gateway 1 may select one edge node 2 to respond to an access request of the terminal device 3 according to a loading status of each edge node 2.

The intelligent scheduling gateway 1 may be further configured to establish a loading status information table according to received loading status parameters of each edge node 2.

The intelligent scheduling gateway 1 may be specifically configured to select, according to the loading status information table, one edge node 2 that meets the second preset condition to respond to the access request.

Since the fourth embodiment and the fifth embodiment correspond to the ninth embodiment, the ninth embodiment may be implemented in cooperation with the fourth embodiment and the fifth embodiment. Related technical details described in the fourth embodiment and the fifth embodiment may be still effective in the ninth embodiment. Technical effects that may be achieved in the fourth embodiment and the fifth embodiment may also be achieved in the ninth embodiment. To reduce repetition, these technical details and technical effects are not described herein again. Correspondingly, related technical details described in the ninth embodiment may also be applied to the fourth embodiment and the fifth embodiment.

Compared with the eighth embodiment, the ninth embodiment may, according to the loading status parameters of each edge node, select an edge node that meets the second preset condition to respond to the access request. That is, an edge node with a lighter loading may be selected to respond to the access request of the terminal device, and thus available and stable services may be provided to the terminal device.

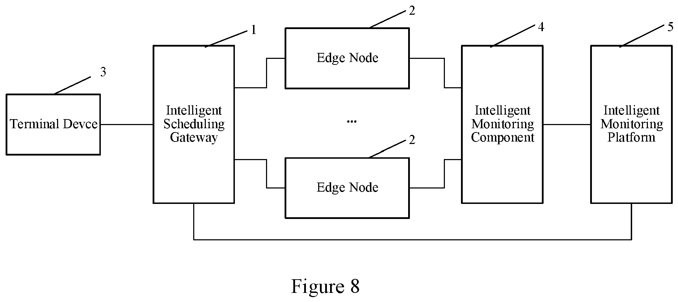

A tenth embodiment of the present disclosure relates to an edge node cluster. The tenth embodiment is an improvement based on the eighth embodiment. A main improvement is that, in the tenth embodiment, referring to Figure 8, the edge node cluster also includes an intelligent monitoring component 4 connected to a plurality of edge nodes 2.

The intelligent monitoring component 4 may be configured to determine, according to operation health status information of each edge node 2, whether each edge node 2 has an abnormality when the intelligent monitoring component 4 receives the operation health status information of each edge node 2. When it is determined that the at least one edge node 2 has an abnormality, the intelligent monitoring component 4 may send alarm information including the information of the at least one edge node 2 that has an abnormality to an intelligent monitoring platform 5. The intelligent monitoring platform 5 may then send a node scheduling instruction including the information of the at least one edge node 2 that has an abnormality to the intelligent scheduling gateway 1.

The intelligent scheduling gateway 1 may be further configured to switch the at least one edge node that has an abnormality when the intelligent scheduling gateway receives the node scheduling instruction sent by the intelligent monitoring platform 5.

Since the sixth embodiment corresponds the tenth embodiment, the tenth embodiment may be implemented in cooperation with the sixth embodiment. Related technical details described in the sixth embodiment may be still effective in the tenth embodiment. Technical effects that may be achieved in the sixth embodiment may also be achieved in the tenth embodiment. To reduce repetition, these technical details and technical effects are not described herein again. Correspondingly, related technical details described in the tenth embodiment may also be applied to the sixth embodiment.

Compared with the eighth embodiment, the tenth embodiment may automatically switch the edge node that has an abnormality to ensure stability and reliability of services provided for the terminal device. It should be noted that the tenth embodiment may also be taken as an improvement of the ninth embodiment, and same technical effects may be achieved.

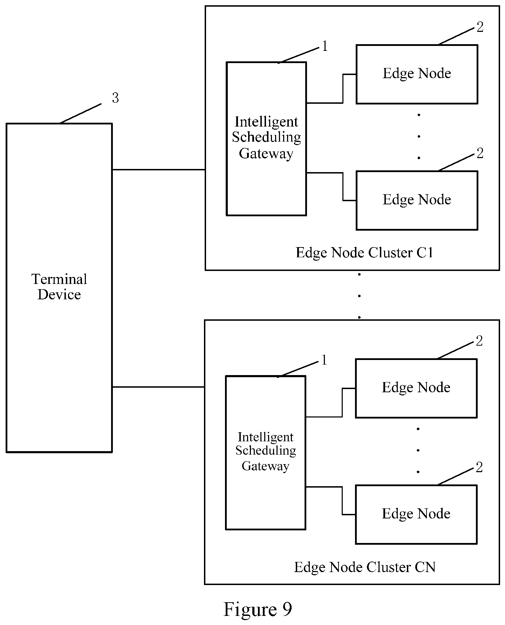

An eleventh embodiment of the present disclosure relates to an intelligent scheduling system. Referring to Figure 9, the intelligent scheduling system includes the terminal device in the seventh embodiment, and a plurality of the edge node clusters according to any one of the eighth to tenth embodiments. In following description, the edge node cluster in the eighth embodiment is used as an example. The intelligent scheduling system includes the terminal device 3 and a plurality of the edge node clusters (edge node clusters C1 to CN). Each of the edge node clusters includes one intelligent scheduling gateway 1 and a plurality of the edge nodes 2 connected to the intelligent scheduling gateway 1.

The terminal device 3 may be configured to send probe packets to each edge node cluster after acquiring addresses of the edge node clusters corresponding to the terminal device 3.

The intelligent scheduling gateway 1 may be configured to feed back detection results to the terminal device 3 when the intelligent scheduling gateway 1 receives the probe packets sent by the terminal device 3.

The terminal device 3 may be further configured to calculate network connection quality parameters of each edge node cluster according to the detection results fed back by each of the edge node clusters. And according to the network connection quality parameters of each of the edge node clusters, the terminal device 3 may initiate an access request to an edge node cluster that meets the first preset condition.

The intelligent scheduling gateway 1 may be further configured to respond to the access request through one edge node 2 when the intelligent scheduling gateway 1 receives the access request of the terminal device 3.

Compared with existing technologies, in the eleventh embodiment, after obtaining the addresses of the plurality of edge node clusters corresponding to the terminal device, the terminal device may send probe packets respectively to each of the edge node clusters, and receive the detection results of the responses by each of the edge node clusters. Accordingly, according to the detection results of the responses by each of the edge node clusters, the terminal device may calculate the network connection quality parameters of each of the edge node clusters. Then, according to the network connection quality parameters of each of the edge node clusters, the terminal device may initiate an access request to the edge node cluster that meets the first preset condition. The edge node cluster that meets the first preset condition may thus respond to the access request. In the eleventh embodiment, the terminal device may be connected to the edge node cluster whose network connection quality parameters meet the first preset condition. That is, the terminal device may be connected to the edge node cluster with a better network connection quality, and thus the terminal device may obtain a better service.

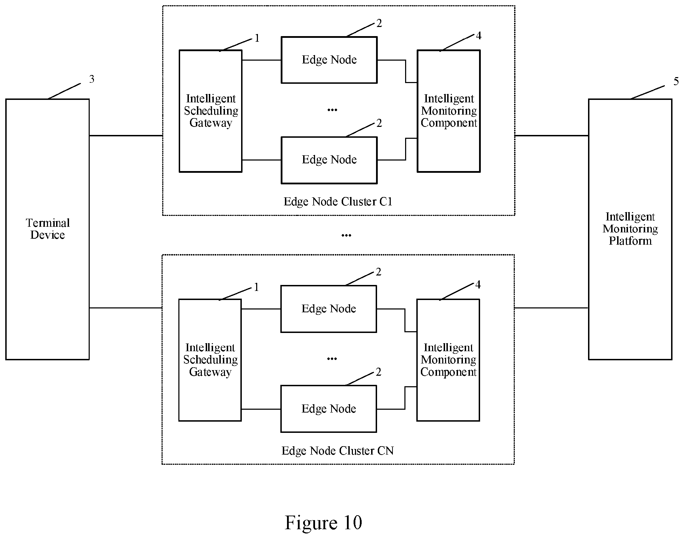

A twelfth embodiment of the present disclosure relates to an intelligent scheduling system. The twelfth embodiment is an improvement based on the eleventh embodiment. A main improvement is that, in the twelfth embodiment, referring to Figure 10, the intelligent scheduling system further includes an intelligent monitoring platform 5. In the twelfth embodiment, the edge node cluster is the edge node cluster in the tenth embodiment. That is, the edge node cluster also includes an intelligent monitoring component 4 connected to a plurality of edge nodes 2.

The intelligent monitoring component 4 may be configured to determine, according to the operating health status information of each edge node, whether each edge node 2 has an abnormality when the intelligent monitoring component receives the operating health status information of each edge node 2. When at least one edge node 2 is determined to have an abnormality, the intelligent monitoring component may send an alarm information including information of the at least one edge node 2 that has an abnormality to the intelligent monitoring platform 5.

The intelligent monitoring platform 5 may be configured to send a node scheduling instruction including the information of the at least one edge node 2 to the intelligent scheduling gateway 1 when the intelligent monitoring platform 5 receives the alarm information.

The intelligent scheduling gateway 1 may be further configured to switch the at least one edge node 2 when the intelligent scheduling gateway receives the node scheduling instruction sent by the intelligent monitoring platform 5.

Compared with the eleventh embodiment, the twelfth embodiment may automatically switch an edge node that has an abnormality to ensure stability and reliability of services provided to the terminal device.

A person skilled in the art may understand that the above embodiments are specific embodiments for implementing the present disclosure. In actual applications, various changes may be made on these embodiments in form and detail, without departing from spirit and scope of the present disclosure.

## Claims

1. An intelligent scheduling method applied to a terminal device, the method comprising:
acquiring addresses of a plurality of edge node clusters corresponding to the terminal device;
sending probe packets to each edge node cluster, and receiving detection results of responses by each edge node cluster;
calculating network connection quality parameters of each edge node cluster according to the detection results of the responses by each edge node cluster; and
according to the network connection quality parameters of each edge node cluster, initiating an access request to an edge node cluster that meets a first preset condition for the edge node cluster that meets the first preset condition to respond to the access request.

2. The intelligent scheduling method according to claim 1, wherein:
domain names of edge nodes are pre-stored in the terminal device; and
acquiring the addresses of the plurality of edge node clusters corresponding to the terminal device comprises:
accessing the domain names of the edge nodes and obtaining the addresses of the plurality of edge node clusters corresponding to the terminal device.

3. The intelligent scheduling method according to claim 1, wherein initiating the access request to the edge node cluster that meets the first preset condition according to the network connection quality parameters of each edge node cluster comprises:
calculating an evaluation value of a network connection quality of each edge node cluster according to the network connection quality parameters of each edge node cluster; and
initiating an access request to an edge node cluster that has a highest evaluation value of the network connection quality.

4. The intelligent scheduling method according to claim 1, wherein the network connection quality parameters comprise any one or any combination of following parameters: delay, packet loss rate, and transmission speed.

5. An intelligent scheduling method, applied to an intelligent scheduling gateway of an edge node cluster, the edge node cluster further comprising a plurality of edge nodes connected to the intelligent scheduling gateway, and the method comprising:
when receiving probe packets sent by a terminal device, feeding back detection results to the terminal device for the terminal device to calculate network connection quality parameters of each edge node cluster according to the detection results fed back by each edge node cluster, and, according to the network connection quality parameters of each edge node cluster, to initiate an access request to the edge node cluster that meets a first preset condition; and
when receiving the access request of the terminal device, responding to the access request through the plurality of edge nodes.

6. The intelligent scheduling method according to claim 5, further including:
establishing a loading status information table according to received loading status parameters of each edge node, wherein
responding to the access request through the plurality of edge nodes comprises:
selecting an edge node that meets a second preset condition to respond to the access request according to the loading status information table.

7. The intelligent scheduling method according to claim 6, wherein:
establishing the loading status information table according to the received loading status parameters of each edge node comprises:
according to the received loading status parameters of each edge node, calculating a loading status evaluation value; and
establishing the loading status information table including the loading status evaluation value corresponding to each edge node, and
selecting the edge node that meets the second preset condition to respond to the access request according to the loading status information table comprises:
selecting an edge node that has a smallest loading status evaluation value in the loading status information table to respond to the access request.

8. The intelligent scheduling method according to claim 5, wherein:
the edge node cluster further includes an intelligent monitoring component;
the intelligent monitoring component is configured to determine, according to operation health status information of each edge node, whether each edge node has an abnormality when the intelligent monitoring component receives the operation health status information of each edge node, and when it is determined that at least one edge node has an abnormality, to send alarm information including information of the at least one edge node that has the abnormality to an intelligent monitoring platform; and
the method further comprises switching the at least one edge node that has the abnormality when the intelligent scheduling gateway receives a node scheduling instruction sent by the intelligent monitoring platform, wherein when the intelligent monitoring platform receives the alarm information, the intelligent monitoring platform sends the node scheduling instruction including information of the at least one edge node that has the abnormality to the intelligent scheduling gateway.

9. The intelligent scheduling method according to claim 8, after switching the at least one edge node that has the abnormality, further comprising:
re-receiving the loading status parameters of each edge node, and updating the loading status information table according to re-received loading status parameters of each edge node.

10. The intelligent scheduling method according to claim 6, wherein the loading status parameters includes any one or any combination of following parameters: number of terminal device connections, bandwidth usage, CPU usage, and memory usage.

11. A terminal device, comprising at least one processor and a memory communicatively connected to the at least one processor, wherein the memory stores instructions executable by the at least one processor, and the at least one processor executes the instructions to perform the intelligent scheduling method according to any one of claims 1-4.

12. An edge node cluster, comprising an intelligent scheduling gateway and a plurality of edge nodes connected to the intelligent scheduling gateway, wherein:
the intelligent scheduling gateway is configured to feed back detection results to a terminal device when the scheduling gateway receives detection packets sent by the terminal device, wherein the terminal device calculates network connection quality parameters of each edge node cluster according to the detection results fed back by each edge node cluster, and initiates an access request to an edge node cluster according to the network connection quality parameters of each edge node cluster; and
the intelligent scheduling gateway is further configured to respond to the access request through the plurality of edge nodes when the intelligent scheduling gateway receives the access request initiated by the terminal device.

13. The edge node cluster according to claim 12, wherein:
the intelligent scheduling gateway is further configured to establish a loading status information table according to received loading status parameters of each edge node; and
the intelligent scheduling gateway is specifically configured to select, according to the loading status information table, an edge node that meets a second preset condition to respond to the access request.

14. The edge node cluster according to claim 12, wherein:
the edge node cluster further includes an intelligent monitoring component connected to the plurality of edge nodes;
the intelligent monitoring component is configured to determine, according to operation health status information of each edge node, whether each edge node has an abnormality when the intelligent monitoring component receives the operation health status information of each edge node, and when it is determined that at least one edge node has an abnormality, to send alarm information including information of the at least one edge node to an intelligent monitoring platform, such that the intelligent monitoring platform sends a node scheduling instruction including the information of the at least one edge node to the intelligent scheduling gateway; and
the intelligent scheduling gateway is further configured to switch the at least one edge node when the intelligent scheduling gateway receives the node scheduling instruction sent by the intelligent monitoring platform.

15. An intelligent scheduling system, comprising the terminal device according to claim 11, and a plurality of the edge node clusters according to any one of claims 12-13.

16. The intelligent scheduling system according to claim 15, wherein:
the terminal device includes the terminal device according to claim 13, and the system further comprises an intelligent monitoring platform;
the intelligent monitoring platform is configured to send a node scheduling instruction including the information of the at least one edge node to the intelligent scheduling gateway when the intelligent monitoring platform receives the alarm information sent by the intelligent monitoring component of the edge node cluster; and
the intelligent scheduling gateway is further configured to switch the at least one edge node when the intelligent scheduling gateway receives the node scheduling instruction sent by the intelligent monitoring platform.
